# EUROPEAN PATENT APPLICATION

(11) **EP 4 394 087 A1**
(43) Date of publication of application: **03.07.2024**
(21) Application number: 22875429.7
(22) Date of filing: 14.04.2022
(51) Int. Cl.: C25B 9/00, C25B 9/23, C25B 9/67, C25B 15/027, C25B 1/042

(54) **HYDROGEN PRODUCTION SYSTEM AND HYDROGEN PRODUCTION METHOD**

(30) Priority: 30.09.2021 JP 2021161626
(71) Applicant: Mitsubishi Heavy Industries, Ltd., Chiyoda-ku, Tokyo 100-8332 (JP)
(72) Inventor: NAKAGIRI, Motohiro, Tokyo 100-8332 (JP); USUI, Yukinori, Tokyo 100-8332 (JP); ASANO, Koji, Tokyo 100-8332 (JP); MATSUO, Takeshi, Tokyo 100-8332 (JP); IWABUCHI, Hiroyuki, Tokyo 100-8332 (JP); HARA, Nobuhide, Tokyo 100-8332 (JP); KOSHIRO, Ikumasa, Tokyo 100-8332 (JP)
(74) Representative: Cabinet Beau de Loménie
(86) International application number: PCT/JP2022/017840
(87) International publication number: WO 2023/053546

(57) **Abstract**

A hydrogen production system and a hydrogen production method include a heat exchanger that heats steam by using a heating medium heated by thermal energy at 600°C or higher, a high-temperature steam electrolysis device that produces hydrogen by using the steam, and a heating device that heats the high-temperature steam electrolysis device by using the steam.

## Description

### Field

The present disclosure relates to a hydrogen production system and a hydrogen production method. Background

As one of hydrogen production technique, there is known a high-temperature steam electrolysis method. The electrolysis method is advantageous in that raw materials are inexpensive and carbon dioxide (CO₂) is not generated in a hydrogen production process. However, in the electrolysis method, hydrogen is generated by electrolysis, so that there is the problem that cost of electric energy is high. Thus, considered is a high-temperature steam electrolysis method for reducing electric energy required for electrolysis by electrolyzing high-temperature steam at 700°C or higher.

However, it is difficult to generate high-temperature steam at 700°C or higher, and in the related art, a temperature of water is raised by a boiler, an electric furnace, or the like to generate steam, and the steam is electrolyzed to generate hydrogen. Additionally, electrolysis of water is endothermic reaction, so that 286 joule of heat needs to be supplied from the outside to electrolyze 1 mole of water. Thus, the steam is electrolyzed at 700°C to 900°C while compensating for heat absorption and sensible heat of the steam at the time of electrolysis of water by Joule heat of a water electrolysis cell. Such a conventional hydrogen production device is disclosed in the following Patent Literature 1, for example.

### Citation List

### Patent Literature

Patent Literature 1: Japanese Patent Application Laid-open No. 2020-041202

### Summary

### Technical Problem

With a hydrogen production device using a high-temperature steam electrolysis method, electric energy required for electrolysis of water can be reduced by using high-temperature steam. However, actually, in the conventional hydrogen production device, generation energy of high-temperature steam at a temperature corresponding to an operating temperature of electrolysis of water is covered by required electric energy, and endothermic reaction of electrolysis of water is also covered by the electric energy. That is, the conventional hydrogen production device is operated at an electric potential of a thermal neutral point at which heat absorption of water electrolysis and heat generation of the water electrolysis cell are balanced, or an electric potential equal to or higher than the electric potential of the thermal neutral point, so that a large amount of electric energy is consumed. Most of the cost of hydrogen production by a high-temperature steam electrolysis method is electric power, so that, if most of the electric power can be covered by renewable energy, carbon dioxide can be reduced. However, supply of electric power of renewable energy is unstable, so that it is difficult to apply the renewable energy to large-scale and stable hydrogen production. On the other hand, electric energy generated by a thermal power generation system is accompanied by generation of carbon dioxide.

The present disclosure solves the problem described above, and an object thereof is to provide a hydrogen production system and a hydrogen production method for reducing energy cost and suppressing generation of carbon dioxide.

### Solution to Problem

In order to achieve the object described above, a hydrogen production system according to the present disclosure includes: a heat exchanger that heats steam by using a heating medium heated by thermal energy at 600°C or higher; a high-temperature steam electrolysis device that produces hydrogen by using the steam; and a heating device that heats the high-temperature steam electrolysis device by using the steam.

Further, a hydrogen production method according to the present disclosure includes the steps of: generating thermal energy at 600°C or higher; heating steam by using a heating medium heated by the thermal energy; heating a high-temperature steam electrolysis device by using the steam; and producing hydrogen by the high-temperature steam electrolysis device by using the steam.

### Advantageous Effects of Invention

With the hydrogen production system and the hydrogen production method according to the present disclosure, energy cost can be reduced, and generation of carbon dioxide can be suppressed.

### Brief Description of Drawings

FIG. 1 is a schematic configuration diagram representing a hydrogen production system according to a first embodiment.
FIG. 2 is a schematic diagram representing a high-temperature steam electrolysis cell.
FIG. 3 is a graph representing a relation between current density and thermal energy.
FIG. 4 is a schematic diagram representing a flow of steam with respect to a high-temperature steam electrolysis cell in a hydrogen production system according to a second embodiment.
FIG. 5 is a schematic diagram representing a hydrogen ejector.
FIG. 6 is a schematic configuration diagram representing a hydrogen production system according to a third embodiment.

### Description of Embodiments

The following describes preferred embodiments of the present disclosure in detail with reference to the drawings. The present disclosure is not limited to the embodiments. In a case in which there are a plurality of embodiments, a combination of the embodiments is also encompassed by the present disclosure. Constituent elements in the embodiments include a constituent element that is easily conceivable by those skilled in the art, substantially the same constituent element, and what is called an equivalent.

### [First embodiment]

### <Hydrogen production system>

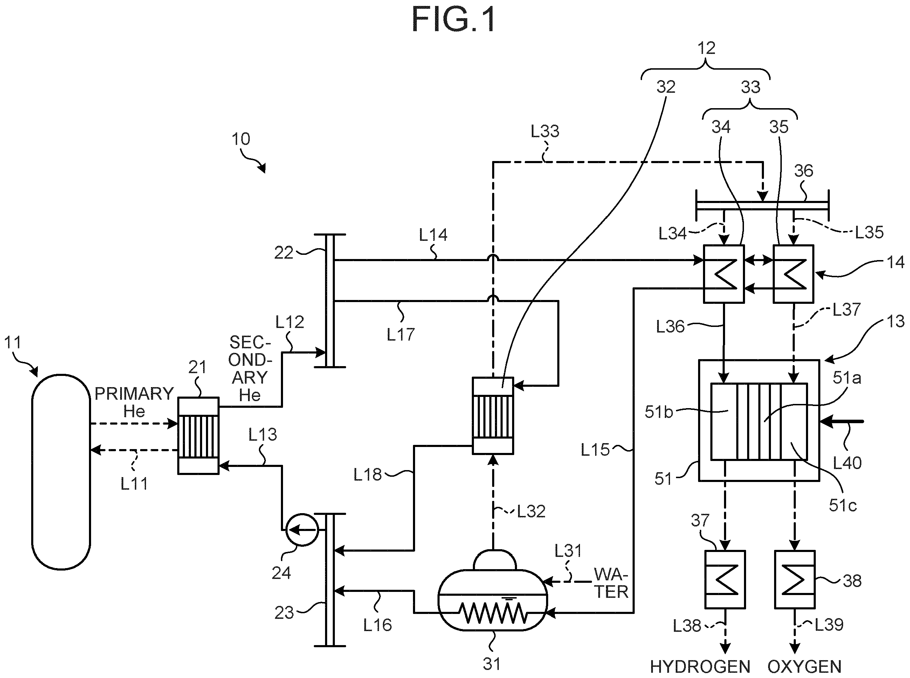

FIG. 1 is a schematic configuration diagram representing a hydrogen production system according to a first embodiment.

In the first embodiment, as illustrated in FIG. 1, a hydrogen production system 10 includes a heat source 11, an intermediate heat exchanger (heat exchanger) 12, a solid electrolyte type high-temperature steam electrolysis device (SOEC) 13, and a heating device 14.

The heat source 11 is a high-temperature gas furnace, and can generate thermal energy at 900°C or higher. The heat source 11 is not limited to the high-temperature gas furnace, and may be any heat source that can generate thermal energy at 600°C or higher. As the heat source, for example, an electric furnace, a heliostat type solar heat collecting device, a boiler and exhausted heat of the boiler, exhausted heat of a gas turbine, and the like may be applied.

The high-temperature gas furnace as the heat source 11 is a nuclear reactor that uses a ceramics material for coating of fuel, helium for a coolant, and graphite for a moderator. The high-temperature gas furnace can generate a helium gas as a heating medium at 900°C or higher. The high-temperature gas furnace as the heat source 11 is coupled to a circulation path L11. The circulation path L11 is also coupled to an intermediate heat exchanger 21 in addition to the heat source 11. The intermediate heat exchanger 21 is coupled to one end part of a supply path L12 and one end part of a return path L13.

The intermediate heat exchanger 21 performs heat exchange between primary helium (a primary heating medium) flowing in the circulation path L11 and secondary helium (a secondary heating medium) flowing in the supply path L12 and the return path L13. That is, the intermediate heat exchanger 21 heats the secondary helium flowing in the supply path L12 and the return path L13 to 900°C, for example, by the primary helium at 950°C flowing in the circulation path L11, for example.

The other end part of the supply path L12 is coupled to a supply header 22. The other end part of the return path L13 is coupled to a return header 23. A circulator 24 is disposed on the return path L13. The hydrogen production system 10 produces hydrogen by using the secondary helium as a heating medium that is heated by thermal energy at 900°C or higher generated in the heat source 11.

The high-temperature steam electrolysis device 13 produces hydrogen by water electrolysis at a high temperature of about 700°C to 900°C using a high-temperature steam electrolysis cell 51 as a solid electrolyte type electrolysis cell. The high-temperature steam electrolysis device 13 includes an electrolyte layer 51a, a porous hydrogen electrode layer 51b, and a porous oxygen electrode layer 51c.

The high-temperature steam electrolysis cell 51 has a flat plate shape as described later. The electrolyte layer 51a is an electrolyte film having a flat plate shape and constituted of a solid electrolyte of an oxygen ion conductor. The porous hydrogen electrode layer 51b is disposed on a surface on one side of the electrolyte layer 51a, and the porous oxygen electrode layer 51c is disposed on a surface on the other side thereof. Herein, the porous hydrogen electrode layer 51b is a cathode electrode on a hydrogen side having a flat plate shape. The porous oxygen electrode layer 51c is an anode electrode on an oxygen side having a flat plate shape.

A steam generator 31 heats water by thermal energy of the secondary helium to generate steam. The steam generator 31 is coupled to a water supply path L31, and also coupled to one end part of a first steam supply path L32. The intermediate heat exchanger 12 includes a first heat exchanger 32 and a second heat exchanger 33. The second heat exchanger 33 includes a heat exchanger 34 on the hydrogen side and a heat exchanger 35 on the oxygen side. The first heat exchanger 32 is coupled to the other end part of the first steam supply path L32, and also coupled to one end part of a second steam supply path L33. The other end part of the second steam supply path L33 is coupled to a steam header 36. The steam header 36 is coupled to one end parts of a third steam supply path L34 and a fourth steam supply path L35. The heat exchanger 34 on the hydrogen side is coupled to the other end part of the third steam supply path L34, and also coupled to one end part of a steam supply path L36 on the hydrogen side. The heat exchanger 35 on the oxygen side is coupled to the other end part of the fourth steam supply path L35, and also coupled to one end part of a steam supply path L37 on the oxygen side.

The first heat exchanger 32 superheats steam by the thermal energy of the secondary helium to generate superheated steam. The heat exchanger 34 on the hydrogen side of the second heat exchanger 33 further superheats the superheated steam by the thermal energy of the secondary helium. The heat exchanger 35 on the oxygen side of the second heat exchanger 33 further superheats the superheated steam by the thermal energy of the secondary helium. On the steam supply paths L32 and L33, the first heat exchanger 32 is disposed on an upstream side in a flowing direction of the steam, the steam header 36 is disposed on a downstream side with respect to the first heat exchanger 32, and the second heat exchanger 33 is disposed on a downstream side with respect to the steam header 36. The heat exchanger 34 on the hydrogen side and the heat exchanger 35 on the oxygen side each serving as the second heat exchanger 33 are disposed in parallel on a downstream side of the steam supply path L33.

In the high-temperature steam electrolysis device 13, the high-temperature steam electrolysis cell 51 is coupled to the other and parts of the steam supply path L36 on the hydrogen side and the steam supply path L37 on the oxygen side. The steam supply path L36 on the hydrogen side is coupled to an inlet side of the porous hydrogen electrode layer 51b, and the steam supply path L37 on the oxygen side is coupled to an inlet side of the porous oxygen electrode layer 51c. The high-temperature steam electrolysis device 13 is coupled to a hydrogen gas discharge path L38 and an oxygen gas discharge path L39. In the high-temperature steam electrolysis device 13, a hydrogen gas discharge path L38 is coupled to an outlet side of the porous hydrogen electrode layer 51b, and an oxygen gas discharge path L39 is coupled to an outlet side of the porous oxygen electrode layer 51c. Heat recovery units 37 and 38 are respectively disposed on the hydrogen gas discharge path L38 and the oxygen gas discharge path L39. The heat recovery units 37 and 38 recover heat of generated hydrogen or oxygen, for example, and heat the steam flowing in the first steam supply path L32.

The high-temperature steam electrolysis device 13 is connected to a power supply path L40, and electric power (electric energy) can be supplied thereto from the outside.

The high-temperature steam electrolysis device 13 produces hydrogen by using the steam heated by the thermal energy of the secondary helium, and also using the electric energy supplied from the power supply path L40. The heating device 14 heats the high-temperature steam electrolysis cell 51 of the high-temperature steam electrolysis device 13 by using the steam heated by the thermal energy of the secondary helium. In this case, the heating device 14 compensates for thermal energy that is lost by endothermic reaction when the high-temperature steam electrolysis device 13 produces hydrogen.

The supply header 22 is coupled to the second heat exchanger 33 via a heating medium supply path L14. In this case, a downstream end part of the heating medium supply path L14 branches into two parts, one of them is coupled to the heat exchanger 34 on the hydrogen side, and the other one is coupled to the heat exchanger 35 on the oxygen side. The second heat exchanger 33 is coupled to the steam generator 31 via a heating medium supply path L15. In this case, an upstream end part of the heating medium supply path L15 branches into two parts, one of them is coupled to the heat exchanger 34 on the hydrogen side, and the other one is coupled to the heat exchanger 35 on the oxygen side. The steam generator 31 is coupled to the return header 23 via a heating medium supply path L16. That is, the secondary helium in the supply header 22 is supplied to the second heat exchanger 33 (the heat exchanger 34 on the hydrogen side, the heat exchanger 35 on the oxygen side) via the heating medium supply path L14 to superheat the steam, supplied from the second heat exchanger 33 to the steam generator 31 via the heating medium supply path L15 to heat water, and returned from the steam generator 31 to the return header 23 via the heating medium supply path L16.

The supply header 22 is coupled to the first heat exchanger 32 via a heating medium supply path L17. The first heat exchanger 32 is coupled to the return header 23 via the heating medium supply path L18. That is, the secondary helium in the supply header 22 is supplied to the first heat exchanger 32 via the heating medium supply path L17 to superheat the steam.

The heating device 14 is disposed as the intermediate heat exchanger 12 that heats the steam. The heating device 14 is particularly constituted of the heat exchanger 34 on the hydrogen side and the heat exchanger 35 on the oxygen side each serving as the second heat exchanger 33. The heating device 14 heats the high-temperature steam electrolysis cell 51 by supplying the superheated steam superheated by the second heat exchanger 33 (the heat exchanger 34 on the hydrogen side, the heat exchanger on the oxygen side) to the high-temperature steam electrolysis cell 51 (the porous hydrogen electrode layer 51b, the porous oxygen electrode layer 51c).

In the high-temperature steam electrolysis cell 51, high-temperature superheated steam is supplied from the steam supply path L36 on the hydrogen side to the porous hydrogen electrode layer 51b. Electric power is supplied to the high-temperature steam electrolysis cell 51 from the power supply path L40, and voltage is applied to the porous hydrogen electrode layer 51b and the porous oxygen electrode layer 51c. When the voltage is applied, the steam is electrolyzed in the porous hydrogen electrode layer 51b, and hydrogen is generated. The generated hydrogen is discharged to the hydrogen gas discharge path L38. On the other hand, oxygen ions generated by electrolysis in the porous hydrogen electrode layer 51b pass through the electrolyte layer 51a, oxygen is generated in the porous oxygen electrode layer 51c, and the generated oxygen is discharged to the oxygen gas discharge path L39.

In the high-temperature steam electrolysis device 13, hydrogen and oxygen are generated based on electrolysis reaction in accordance with the following expression.

H₂O → H₂ + 1/2O₂

### <High-temperature steam electrolysis cell>

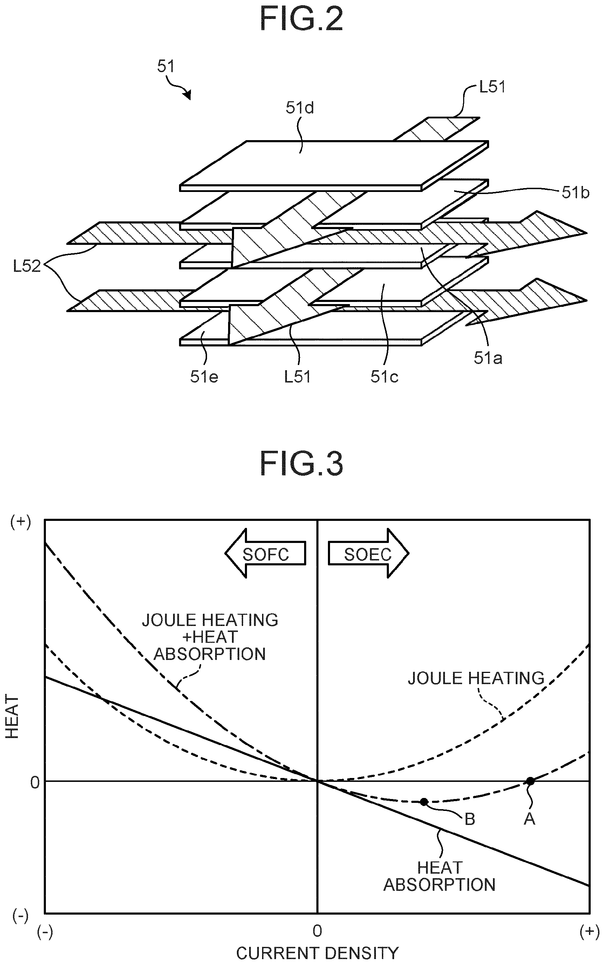

FIG. 2 is a schematic diagram representing the high-temperature steam electrolysis cell.

As illustrated in FIG. 1 and FIG. 2, the high-temperature steam electrolysis cell 51 is a solid electrolyte type steam electrolysis device having a flat plate shape. The high-temperature steam electrolysis cell 51 is configured by disposing the porous hydrogen electrode layer 51b having a flat plate shape on the surface on one side of the electrolyte layer 51a having a flat plate shape, and disposing the porous oxygen electrode layer 51c having a flat plate shape on the surface on the other side thereof. A separator 51d on the hydrogen side is disposed on an outer side of the porous hydrogen electrode layer 51b, and a separator 51e on the oxygen side is disposed on an outer side of the porous oxygen electrode layer 51c.

A first flow channel L51 and a second flow channel L52 are disposed inside the high-temperature steam electrolysis cell 51. The first flow channel L51 is disposed between the separator 51d on the hydrogen side and the porous hydrogen electrode layer 51b, and between the electrolyte layer 51a and the porous oxygen electrode layer 51c. The second flow channel L52 is disposed between the porous hydrogen electrode layer 51b and the electrolyte layer 51a, and between the porous oxygen electrode layer 51c and the separator 51e on the oxygen side. The first flow channel L51 and the second flow channel L52 intersect in directions orthogonal to each other, but may be parallel with each other.

An upstream side of the first flow channel L51 is connected to the steam supply path L36 on the hydrogen side, and a downstream side thereof is connected to the hydrogen gas discharge path L38. An upstream side of the second flow channel L52 is connected to the steam supply path L37 on the oxygen side, and a downstream side thereof is connected to the oxygen gas discharge path L39.

Thus, the superheated steam superheated by the heat exchanger 34 on the hydrogen side is supplied from the steam supply path L36 on the hydrogen side to the first flow channel L51, and the superheated steam superheated by the heat exchanger 35 on the oxygen side is supplied from the steam supply path L37 on the oxygen side to the second flow channel L52. Herein, the heating device 14 heats the high-temperature steam electrolysis cell 51 by the supplied superheated steam. The superheated steam supplied to the first flow channel L51 is electrolyzed to generate hydrogen and oxygen. The superheated steam containing hydrogen is discharged to the hydrogen gas discharge path L38. On the other hand, the steam containing oxygen is pushed out by the superheated steam supplied to the second flow channel L52, and discharged to the oxygen gas discharge path L39.

### <Hydrogen production method>

A hydrogen production method according to the present embodiment includes a step of generating thermal energy at 600°C or higher, a step of heating the steam by using secondary helium (heating medium) heated by the thermal energy, a step of heating the high-temperature steam electrolysis device 13 by using the steam, and a step of producing hydrogen by the high-temperature steam electrolysis device by using the steam.

Specifically, as illustrated in FIG. 1, the high-temperature gas furnace as the heat source 11 generates primary helium at 950°C, for example. The high-temperature primary helium flows through the circulation path L11, exchanges heat with the secondary helium flowing in the return path L13 in the intermediate heat exchanger 21, and heats the secondary helium to 900°C, for example. The secondary helium subjected to heat exchange in the intermediate heat exchanger 21 flows through the supply path L12 to be supplied to the supply header 22 at about 900°C, for example.

When the circulator 24 is driven, the high-temperature secondary helium circulates while being heated by the intermediate heat exchanger 21. The secondary helium in the supply header 22 is supplied to the second heat exchanger 33 via the heating medium supply path L14 to superheat the steam, and supplied from the second heat exchanger 33 to the steam generator 31 via the heating medium supply path L15, and heat water supplied from the water supply path L31 to generate the steam. Additionally, the secondary helium in the supply header 22 is supplied to the first heat exchanger 32 via the heating medium supply path L17 to superheat the steam.

The steam generator 31 heats water supplied from the water supply path L31 to generate steam. The steam is supplied to the first heat exchanger 32 via the first steam supply path L32 to be superheated, and supplied to the steam header 36 via the second steam supply path L33. The heated steam in the steam header 36 is supplied to the heat exchanger 34 on the hydrogen side via the third steam supply path L34 to be further superheated, and supplied to the porous hydrogen electrode layer 51b of the high-temperature steam electrolysis cell 51 as high-temperature steam at 850 °C, for example. The heated steam in the steam header 36 is supplied to the heat exchanger 35 on the oxygen side via the fourth steam supply path L35 to be further superheated, and supplied to the porous oxygen electrode layer 51c of the high-temperature steam electrolysis cell 51 as high-temperature steam at 850 °C, for example.

The high-temperature steam electrolysis cell 51 is heated by the high-temperature steam supplied from the heat exchanger 34 on the hydrogen side and the heat exchanger 35 on the oxygen side, electrolyzes the high-temperature steam by electric power supplied from the power supply path L40, and generates hydrogen and oxygen.

That is, as illustrated in FIG. 1 and FIG. 2, the high-temperature steam is supplied to the first flow channel L51 of the high-temperature steam electrolysis cell 51 through the steam supply path L36 on the hydrogen side. At this point, electric power is supplied to the high-temperature steam electrolysis cell 51 from the power supply path L40, and voltage is applied to the porous hydrogen electrode layer 51b and the porous oxygen electrode layer 51c. The steam in the first flow channel L51 is then electrolyzed in the porous hydrogen electrode layer 51b to generate hydrogen, and the hydrogen flows downward in the first flow channel L51. On the other hand, oxygen ions generated by electrolysis in the porous hydrogen electrode layer 51b pass through the high-temperature steam electrolysis cell 51 while being diffused, and are discharged to the second flow channel L2 as oxygen.

The hydrogen that has flowed in the first flow channel L51 is discharged to the hydrogen gas discharge path L38. On the other hand, the oxygen discharged to the second flow channel L52 is discharged to the oxygen gas discharge path L39. At this point, the high-temperature steam is supplied to the second flow channel L52 of the high-temperature steam electrolysis cell 51 through the steam supply path L37 on the oxygen side. The oxygen discharged to the second flow channel L52 is then pushed out to the oxygen gas discharge path L39 by the steam supplied to the second flow channel L52.

### <Principle of hydrogen production method>

FIG. 3 is a graph representing a relation between current density and thermal energy.

FIG. 3 represents a relation between current density and thermal energy in a fuel battery (SOFC) and a high-temperature steam electrolysis device (SOEC). As illustrated in FIG. 3, heat absorption caused by high-temperature steam electrolysis is lowered as a primary function (proportional) in accordance with increasing current density. Joule heating caused by high-temperature steam electrolysis rises as a secondary function in accordance with increasing current density. Thus, heat obtained by combining Joule heating and heat absorption is lowered in accordance with increasing current density, and rises.

In conventional hydrogen production systems, the heat source (high-temperature gas furnace) 11 as in the first embodiment is not provided, so that heat generated by Joule heating caused in the high-temperature steam electrolysis device compensates for endothermic reaction at the time of electrolyzing water. That is, conventional high-temperature steam electrolysis devices operate at an electric potential equal to or higher than a thermal neutral point A.

On the other hand, the hydrogen production system 10 in the first embodiment includes the heat source (high-temperature gas furnace) 11, so that the hydrogen production system 10 can compensate for endothermic reaction at the time of electrolyzing water by heating the steam and the high-temperature steam electrolysis device 13 (high-temperature steam electrolysis cell 51) using the high-temperature helium that is heated by thermal energy at 600°C or higher generated by the heat source 11. Thus, the hydrogen production system 10 in the first embodiment can operate at an electric potential of an operating point B equal to or lower than the thermal neutral point A. At the operating point B, it is possible to reduce electric energy used for electrolysis of water without converting electric energy into thermal energy (Joule heating).

### [Second embodiment]

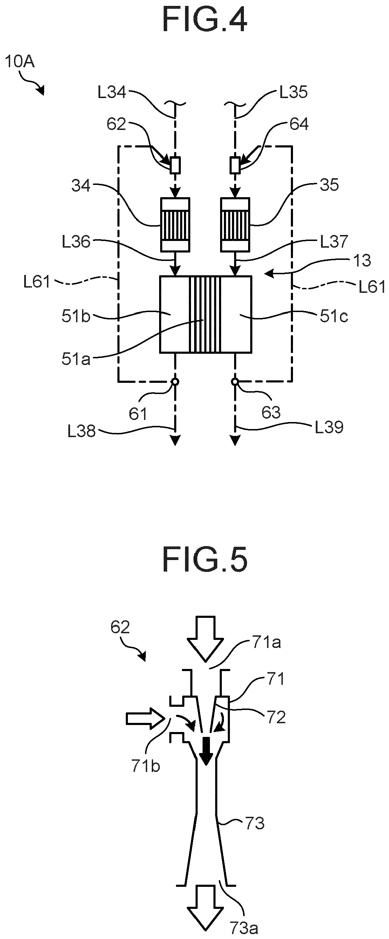

FIG. 4 is a schematic diagram representing a flow of the steam with respect to the high-temperature steam electrolysis cell in the hydrogen production system according to a second embodiment, and FIG. 5 is a schematic diagram representing a hydrogen ejector. A basic configuration of the second embodiment is the same as that of the first embodiment described above, and is described with reference to FIG. 1. A member having the same function as that in the first embodiment described above is denoted by the same reference numeral, and detailed description thereof will not be repeated.

In the second embodiment, as illustrated in FIG. 1 and FIG. 4, similarly to the first embodiment, a hydrogen production system 10A (FIG. 4) includes the heat source 11, the intermediate heat exchanger 12, the high-temperature steam electrolysis device 13, and the heating device 14. The hydrogen production system 10A in the second embodiment is obtained by changing a configuration of supplying the steam to the high-temperature steam electrolysis device 13 in the first embodiment.

In the high-temperature steam electrolysis device 13, an inlet side of the heat exchanger 34 on the hydrogen side is coupled to the third steam supply path L34, and an outlet side thereof is coupled to the porous hydrogen electrode layer 51b of the high-temperature steam electrolysis cell 51 via the steam supply path L36 on the hydrogen side. An inlet side of the heat exchanger 35 on the oxygen side is coupled to the fourth steam supply path L35, and an outlet side thereof is coupled to the porous oxygen electrode layer 51c of the high-temperature steam electrolysis cell 51 via the steam supply path L37 on the oxygen side. In the high-temperature steam electrolysis cell 51, the porous hydrogen electrode layer 51b is coupled to the hydrogen gas discharge path L38, and the porous oxygen electrode layer 51c is coupled to the oxygen gas discharge path L39.

As illustrated in FIG. 4, a circulation path L61 on the hydrogen side and a circulation path L62 on the oxygen side are disposed in the hydrogen production system 10A. One end part of the circulation path L61 on the hydrogen side is coupled to a branch part 61 of the hydrogen gas discharge path L38, and the other end part thereof is coupled to the third steam supply path L34. An ejector 62 on the hydrogen side is disposed at a coupling part between the circulation path L61 on the hydrogen side and the third steam supply path L34. One end part of the circulation path L62 on the oxygen side is coupled to a branch part 63 of the oxygen gas discharge path L39, and the other end part thereof is coupled to the fourth steam supply path L35. An ejector 64 on the oxygen side is disposed at a coupling part between the circulation path L62 on the oxygen side and the fourth steam supply path L35.

The ejector 62 on the hydrogen side and the ejector 64 on the oxygen side have similar configurations. As illustrated in FIG. 4 and FIG. 5, the ejector 62 on the hydrogen side includes a main body 71, a nozzle 72, and a diffuser 73. The main body 71 has a cylindrical shape, and includes an inlet part 71a disposed on a base end part and a suction part 71b disposed on an outer peripheral part. The suction part 71b is coupled to the circulation path L61 on the hydrogen side. The nozzle 72 is coupled to the main body 71 to communicate with the inlet part 71a. The nozzle 72 has a cylindrical shape, and a flow channel thereof is narrowed toward the downstream side. The diffuser 73 is coupled to the main body 71 to communicate with the nozzle 72. The diffuser 73 has a cylindrical shape, and a flow channel thereof is widened toward the downstream side. An ejection part 73a is disposed on a front end portion of the diffuser 73.

Thus, the steam in the third steam supply path L34 passes through the ejector 62 on the hydrogen side to be supplied to the heat exchanger 34 on the hydrogen side, is superheated therein to be superheated steam, and is supplied to the porous hydrogen electrode layer 51b of the high-temperature steam electrolysis cell 51. The steam containing hydrogen generated in the high-temperature steam electrolysis cell 51 is discharged to the hydrogen gas discharge path L38.

At this point, the steam containing hydrogen discharged to the hydrogen gas discharge path L38 partially flows to the circulation path L61 on the hydrogen side. In the ejector 62 on the hydrogen side, flow velocity of the steam supplied from the inlet part 71a is increased at the nozzle 72, so that suction force works on the suction part 71b. The steam containing hydrogen that has flowed from the hydrogen gas discharge path L38 to the circulation path L61 on the hydrogen side is sucked into the main body 71 via the suction part 71b. The steam containing hydrogen that has been sucked into the main body 71 through the suction part 71b from the circulation path L61 on the hydrogen side is mixed with the steam supplied from the inlet part 71a, and supplied to the porous hydrogen electrode layer 51b.

On the other hand, the steam in the fourth steam supply path L35 passes through the ejector 64 on the oxygen side to be supplied to the heat exchanger 35 on the oxygen side, is superheated therein to be superheated steam, and is supplied to the porous oxygen electrode layer 51c of the high-temperature steam electrolysis cell 51. The steam containing oxygen generated in the high-temperature steam electrolysis cell 51 is discharged to the oxygen gas discharge path L39.

At this point, the steam containing oxygen discharged to the oxygen gas discharge path L39 partially flows to the circulation path L62 on the oxygen side. In the ejector 64 on the oxygen side, similarly to the ejector 62 on the hydrogen side, the steam containing oxygen that has flowed from the oxygen gas discharge path L39 to the circulation path L62 on the oxygen side is sucked, mixed with the supplied steam, and supplied to the porous oxygen electrode layer 51c.

In the hydrogen production system 10A, part of the steam containing hydrogen discharged from the porous hydrogen electrode layer 51b of the high-temperature steam electrolysis cell 51 is returned to the inlet side of the porous hydrogen electrode layer 51b via the circulation path L61 on the hydrogen side. Thus, the superheated steam the amount of which is larger than a required amount for steam electrolysis can be supplied to the porous hydrogen electrode layer 51b, and endothermic reaction of steam electrolysis can be compensated for. In the hydrogen production system 10A, part of the steam containing oxygen discharged from the porous oxygen electrode layer 51c of the high-temperature steam electrolysis cell 51 is returned to the inlet side of the porous oxygen electrode layer 51c via the circulation path L62 on the oxygen side. Thus, a large amount of superheated steam can be supplied to the porous oxygen electrode layer 51c, and it is possible to prevent the temperature of the high-temperature steam electrolysis cell 51 from being lowered due to the endothermic reaction.

### [Third embodiment]

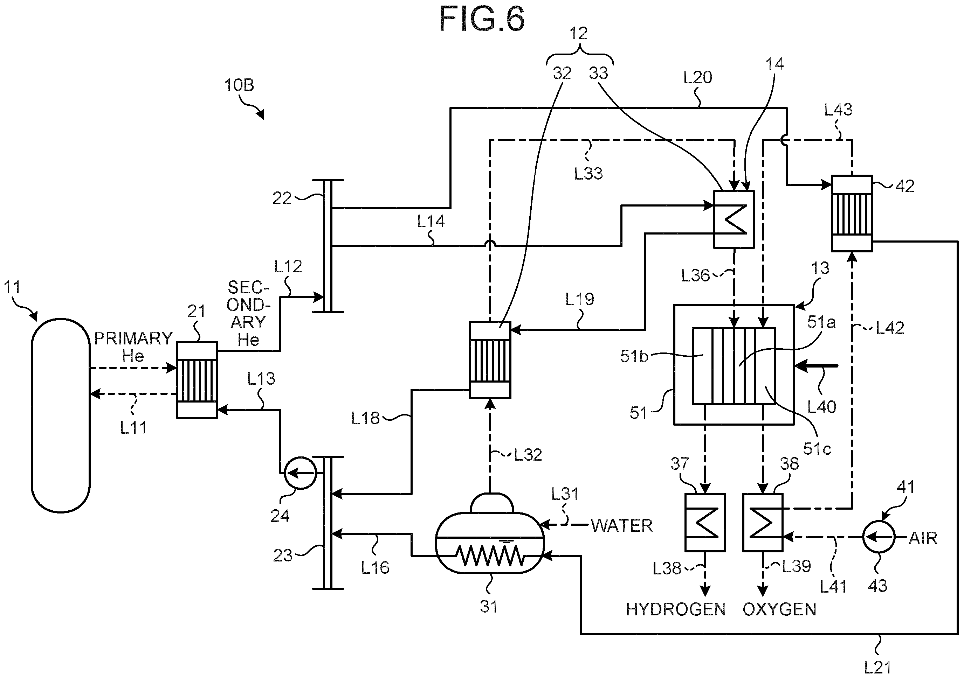

FIG. 6 is a schematic configuration diagram representing the hydrogen production system according to a third embodiment. A member having the same function as that in the first embodiment described above is denoted by the same reference numeral, and detailed description thereof will not be repeated.

In the third embodiment, as illustrated in FIG. 6, similarly to the first embodiment, a hydrogen production system 10B includes the heat source 11, the intermediate heat exchanger 12, the high-temperature steam electrolysis device 13, and the heating device 14. The hydrogen production system 10B in the third embodiment is obtained by changing a configuration of supplying gas to the high-temperature steam electrolysis device 13 in the first embodiment.

The supply header 22 is coupled to the second heat exchanger 33 via the heating medium supply path L14. The second heat exchanger 33 is coupled to the first heat exchanger 32 via a heating medium supply path L19. That is, the secondary helium in the supply header 22 is supplied to the second heat exchanger 33 via the heating medium supply path L14 to superheat the steam, and supplied from the second heat exchanger 33 to the first heat exchanger 32 to heat the steam. The first heat exchanger 32 is coupled to the return header 23 via the heating medium supply path L18.

A gas supply device 41 supplies gas (air or steam) to the porous oxygen electrode layer 51c of the high-temperature steam electrolysis cell 51. A gas heating device 42 heats the gas supplied to the porous oxygen electrode layer 51c by the thermal energy of the secondary helium. A circulator 43 constituting the gas supply device 41 is disposed on a gas supply path L41. The gas supply path L41 is coupled to the heat recovery unit 38. The heat recovery unit 38 is coupled to the gas heating device 42 via a gas supply path L42. The gas heating device 42 is coupled to the porous oxygen electrode layer 51c via a gas supply path L43.

The supply header 22 is coupled to the gas heating device 42 via a heating medium supply path L20. The gas heating device 42 is coupled to the steam generator 31 via a heating medium supply path L21. That is, the secondary helium in the supply header 22 is supplied to the gas heating device 42 via the heating medium supply path L20 to heat gas, and supplied from the gas heating device 42 to the steam generator 31 via the heating medium supply path L21.

When the circulator 43 is driven, the gas (air) is supplied from the gas supply path L41 to the heat recovery unit 38, and heated by oxygen flowing in the oxygen gas discharge path L39. The heated gas is supplied to the gas heating device 42 via the gas supply path L42, and heated by the thermal energy of the secondary helium. The heated gas is supplied to the porous oxygen electrode layer 51c via the gas supply path L43, and generated oxygen is discharged to the oxygen gas discharge path L39.

The hydrogen production system 10B uses gas heated by the thermal energy of the secondary helium as a carrier gas for discharging the oxygen generated by the high-temperature steam electrolysis device 13 to the oxygen gas discharge path L39. Thus, the oxygen generated by the high-temperature steam electrolysis device 13 can be efficiently discharged without lowering the temperature of the high-temperature steam electrolysis device 13.

### [Working effect of present embodiment]

The hydrogen production system according to a first aspect includes the intermediate heat exchanger 12 that heats the steam by using the secondary helium (heating medium) heated by thermal energy at 600°C or higher, the high-temperature steam electrolysis device 13 that produces hydrogen by using the steam, and the heating device 14 that heats the high-temperature steam electrolysis device 13 by using the steam.

The hydrogen production system according to the first aspect heats the high-temperature steam electrolysis device 13 by high-temperature steam heated by using the heating medium heated by the thermal energy at 600°C or higher, and supplies the high-temperature steam heated by using the heating medium heated by the thermal energy at 600°C or higher to the high-temperature steam electrolysis device 13 to produce hydrogen by electrolysis. Thus, it is possible to suppress generation of carbon dioxide by reducing a use amount of electric energy generated by a thermal power generation system and the like, and energy cost can be reduced.

In the hydrogen production system according to a second aspect, the heating device 14 compensates for thermal energy that is lost by endothermic reaction when the high-temperature steam electrolysis device 13 produces hydrogen. Due to this, it is possible to reduce a supply amount of thermal energy from the outside to the high-temperature steam electrolysis device 13.

In the hydrogen production system according to a third aspect, the electrolyte layer 51a having a flat plate shape, the porous hydrogen electrode layer 51b having a flat plate shape that is disposed on one surface side of the electrolyte layer 51a, and the porous oxygen electrode layer 51c having a flat plate shape that is disposed on the other surface side of the electrolyte layer 51a are disposed as the high-temperature steam electrolysis cell 51, and the steam is supplied to the porous hydrogen electrode layer 51b. Due to this, the high-temperature steam electrolysis device 13 can be heated by the high-temperature steam that is electrolyzed by the high-temperature steam electrolysis device 13 to produce hydrogen, and the structure of the high-temperature steam electrolysis cell 51 can be simplified.

In the hydrogen production system according to a fourth aspect, the circulation path L61 on the hydrogen side is disposed to return part of the steam containing hydrogen discharged from a discharge side of the porous hydrogen electrode layer 51b to the inlet side of the porous hydrogen electrode layer 51b. Due to this, the superheated steam the amount of which is larger than a required amount for steam electrolysis can be supplied to the porous hydrogen electrode layer 51b, and endothermic reaction of steam electrolysis can be compensated for.

In the hydrogen production system according to a fifth aspect, the circulation path L62 on the oxygen side is disposed to return part of the steam containing oxygen discharged from a discharge side of the porous oxygen electrode layer 51c to the inlet side of the porous oxygen electrode layer 51c. Due to this, a large amount of superheated steam can be supplied to the porous oxygen electrode layer 51c, and it is possible to prevent the temperature of the high-temperature steam electrolysis cell 51 from being lowered due to the endothermic reaction.

The hydrogen production system according to a sixth aspect includes the steam generator 31 that generates the steam to be supplied to the high-temperature steam electrolysis device 13 via the steam supply paths L32, L33, L34, and L35. The intermediate heat exchanger 12 includes the first heat exchanger 32 disposed on the steam supply paths L32 and L33, and the second heat exchanger 33 disposed on the downstream side with respect to the first heat exchanger 32 on the steam supply paths L33, L34, and L35. The secondary helium is supplied from the second heat exchanger 33 to the first heat exchanger 32. Due to this, by supplying the heating medium from the second heat exchanger 33 on the downstream side to the first heat exchanger 32 on the upstream side, the thermal energy of the heating medium can be effectively used.

The hydrogen production system according to a seventh aspect includes the heat exchanger 34 on the hydrogen side that heats the steam to be supplied to the porous hydrogen electrode layer 51b, and the heat exchanger 35 on the oxygen side that heats the steam to be supplied to the porous oxygen electrode layer 51c as the second heat exchanger 33. Due to this, the steam to be supplied to the porous hydrogen electrode layer 51b and the steam to be supplied to the heat exchanger 35 on the oxygen side can be efficiently heated.

The hydrogen production system according to an eighth aspect includes the gas supply device 41 that supplies gas to the porous oxygen electrode layer 51c, and the gas heating device 42 that heats gas to be supplied to the porous oxygen electrode layer 51c using the secondary helium. Due to this, the oxygen generated by the high-temperature steam electrolysis cell 51 can be efficiently discharged without lowering the temperature of the high-temperature steam electrolysis cell 51.

In the hydrogen production system according to a ninth aspect, the high-temperature gas furnace is disposed as the heat source 11 that can generate thermal energy, and the intermediate heat exchanger 12 heats the steam by using the heating medium that is heated by the thermal energy of high-temperature helium generated in the high-temperature gas furnace. Due to this, a generation amount of carbon dioxide can be reduced.

The hydrogen production method according to a tenth aspect includes a step of generating thermal energy at 600°C or higher, a step of heating the steam by using secondary helium (heating medium) heated by the thermal energy, a step of heating the high-temperature steam electrolysis device 13 by using the steam, and a step of producing hydrogen by the high-temperature steam electrolysis device by using the steam. Due to this, it is possible to suppress generation of carbon dioxide by reducing a use amount of electric energy generated by a thermal power generation system and the like, and energy cost can be reduced.

In the embodiments described above, the high-temperature steam electrolysis cell 51 is assumed to have a flat plate shape, but the shape is not limited thereto.

### Reference Signs List

- 10, 10A, 10B: HYDROGEN PRODUCTION SYSTEM
- 11: HEAT SOURCE
- 12: INTERMEDIATE HEAT EXCHANGER (HEAT EXCHANGER)
- 13: HIGH-TEMPERATURE STEAM ELECTROLYSIS DEVICE
- 14: HEATING DEVICE
- 21: INTERMEDIATE HEAT EXCHANGER (HEAT EXCHANGER)
- 22: SUPPLY HEADER
- 23: RETURN HEADER
- 24: CIRCULATOR
- 31: STEAM GENERATOR
- 32: FIRST HEAT EXCHANGER
- 33: SECOND HEAT EXCHANGER
- 34: HEAT EXCHANGER ON HYDROGEN SIDE
- 35: HEAT EXCHANGER ON OXYGEN SIDE
- 36: STEAM HEADER
- 37,: 38 HEAT RECOVERY UNIT
- 41: GAS SUPPLY DEVICE
- 42: GAS HEATING DEVICE
- 43: CIRCULATOR
- 51: HIGH-TEMPERATURE STEAM ELECTROLYSIS CELL
- 51a: ELECTROLYTE LAYER
- 51b: POROUS HYDROGEN ELECTRODE LAYER
- 51c: POROUS OXYGEN ELECTRODE LAYER
- 51d: SEPARATOR ON HYDROGEN SIDE
- 51e: SEPARATOR ON OXYGEN SIDE
- 61: BRANCH PART
- 62: EJECTOR ON HYDROGEN SIDE
- 63: BRANCH PART
- 64: EJECTOR ON OXYGEN SIDE
- L11: CIRCULATION PATH
- L12: SUPPLY PATH
- L13: RETURN PATH
- L14, L15, L16, L17, L18, L19, L20, L21: HEATING MEDIUM SUPPLY PATH
- L31: WATER SUPPLY PATH
- L32: FIRST STEAM SUPPLY PATH
- L33: SECOND STEAM SUPPLY PATH
- L34: THIRD STEAM SUPPLY PATH
- L35: FOURTH STEAM SUPPLY PATH
- L36: STEAM SUPPLY PATH ON HYDROGEN SIDE
- L37: STEAM SUPPLY PATH ON OXYGEN SIDE
- L38: HYDROGEN GAS DISCHARGE PATH
- L39: OXYGEN GAS DISCHARGE PATH
- L40: POWER SUPPLY PATH
- L41, L42, L43: GAS SUPPLY PATH
- L51: FIRST FLOW CHANNEL
- L52: SECOND FLOW CHANNEL
- L61: CIRCULATION PATH ON HYDROGEN SIDE
- L62: CIRCULATION PATH ON OXYGEN SIDE

## Claims

1. A hydrogen production system comprising:
a heat exchanger that heats steam by using a heating medium heated by thermal energy at 600°C or higher;
a high-temperature steam electrolysis device that produces hydrogen by using the steam; and
a heating device that heats the high-temperature steam electrolysis device by using the steam.

2. The hydrogen production system according to claim 1, wherein the heating device compensates for thermal energy that is lost by endothermic reaction when the high-temperature steam electrolysis device produces hydrogen.

3. The hydrogen production system according to claim 1 or 2, wherein the high-temperature steam electrolysis device includes an electrolyte layer having a flat plate shape, a hydrogen electrode layer having a flat plate shape that is disposed on one surface side of the electrolyte layer, and an oxygen electrode layer having a flat plate shape that is disposed on the other surface side of the electrolyte layer, and the steam is supplied to the hydrogen electrode layer.

4. The hydrogen production system according to claim 3, wherein a circulation path on a hydrogen side is disposed to return part of steam containing hydrogen discharged from a discharge side of the hydrogen electrode layer to an inlet side of the hydrogen electrode layer.

5. The hydrogen production system according to claim 3, wherein a circulation path on an oxygen side is disposed to return part of steam containing oxygen discharged from a discharge side of the oxygen electrode layer to an inlet side of the oxygen electrode layer.

6. The hydrogen production system according to claim 3, comprising a steam generator that generates the steam to be supplied to the high-temperature steam electrolysis device via a steam supply path,
wherein the heat exchanger includes a first heat exchanger disposed on the steam supply path and a second heat exchanger disposed on a downstream side with respect to the first heat exchanger on the steam supply path, and
the heating medium is supplied from the second heat exchanger to the first heat exchanger.

7. The hydrogen production system according to claim 6, wherein the second heat exchanger includes a heat exchanger on a hydrogen side that heats the steam to be supplied to the hydrogen electrode layer, and a heat exchanger on an oxygen side that heats the steam to be supplied to the oxygen electrode layer.

8. The hydrogen production system according to claim 3, comprising:
a gas supply device that supplies gas to the oxygen electrode layer; and
a gas heating device that heats the gas by using the heating medium.

9. The hydrogen production system according to claim 1, wherein
a high-temperature gas furnace is disposed as a heat source for generating the thermal energy, and
the heat exchanger heats steam by using a heating medium heated by thermal energy of high-temperature helium generated in the high-temperature gas furnace.

10. A hydrogen production method comprising the steps of:
generating thermal energy at 600°C or higher;
heating steam by using a heating medium heated by the thermal energy;
heating a high-temperature steam electrolysis device by using the steam; and
producing hydrogen by the high-temperature steam electrolysis device by using the steam.
